# EUROPEAN PATENT APPLICATION

(11) **EP 2 631 619 A1**
(43) Date of publication of application: **28.08.2013**
(21) Application number: 12157173.1
(22) Date of filing: 27.02.2012
(51) Int. Cl.: G01J 3/02, G01J 3/28

(54) **Spectral imager**

(71) Applicant: Nederlandse Organisatie voor Toegepast -Natuurwetenschappelijk Onderzoek TNO, 2628 VK Delft (NL)
(72) Inventor: Harmsma, Peter Johan, 2628 VK Delft (NL)
(74) Representative: Jansen, Cornelis Marinus

(57) **Abstract**

A system and method are provided for spectral imaging an object or scene 2. A first image 2a of the object or scene 2 is projected on a spatial modulator 6 and divided into a plurality of first image segments 2a' modulated with a respective plurality of modulation frequencies f1-fN. A spectrally resolved second image segment 2b' of each first image segment 2a' is projected onto a sensor 4 forming a second image 2b in such a way that overlapping spectral components λ of different second image segments 2b' on the sensor 4 originating from different first image segments 2a' have distinct modulation frequencies f1-fN. The projected second image segments 2b' are read out from the sensor 4 and demodulated according to the distinct modulation frequencies f1-fN. In this way projected second image segments 2b' overlapping on the sensor 4 may be distinguished on the basis of the distinct modulation frequencies f1-fN.

## Description

### FIELD AND BACKGROUND OF THE INVENTION

The present invention relates to the field of spectroscopy, in particular to a spectral imager and a method for spectrally imaging an object or scene.

A spectral imager, also referred to as multispectral or hyper-spectral imager, is a device that is used to obtain spatially resolved spectral information of an object or scene under investigation. In a conventional spectral imager, light emitted or reflected by a given object or scene is imaged onto the entrance of a spectrometer, usually a slit element that transmits a single line image of the object or scene. The spectrometer in turn re-images this light to another location while decomposing this light according to its wavelength in a direction orthogonal to the orientation of the slit element, where it can readily be observed or recorded. In this manner, each line image of the object or scene is decomposed into a two-dimensional data array, and by scanning the object or scene in line-by-line increments, a three-dimensional data-array is formed. A disadvantage of these conventional scanning-type imagers is that scanning the image line by line may take a substantial amount of time and may involve moving parts for scanning the object or scene.

US2011285995 discloses a spectral imaging method for simultaneously acquiring spectral information by using a large format array detector or a combination of array detectors. The disclosed method operates by spatially redirecting image mapping regions to obtain space between the detectors/pixels. Then, through the use of diffractive, refractive, or combined components, an imager fills this space with spectral information from these redistributed image zones. This final spatially and spectrally redistributed image is detected and recorded by an image sensor, thereby providing 3-dimensional (x, y, λ) information on the image sensor. Unfortunately, this known spectral imaging method requires a complicated projection system and a large sensor.

There is a need for a simpler spectral imager and method for spectral imaging.

### SUMMARY OF THE INVENTION

In a first aspect there is provided a spectral imager for imaging a multispectral object or scene, the spectral imager comprising a projection system arranged for projecting an image of the object or scene onto a sensor, the projection system comprising a spectral resolving element arranged for spatially displacing spectral components of the image on the sensor; and a readout device arranged for reading out the image from the sensor; wherein a first part of the projection system is arranged for projecting a first image of the object or scene onto a spatial modulator comprising a plurality of modulator segments arranged for providing a modulation of a respective plurality of first image segments of the first image projected on the said modulator segments; and driving circuitry arranged for driving the plurality of modulator segments with a respective plurality of modulation frequencies thereby passing each of said plurality of first image segments with a respective modulation frequency on to a second part of the projection system; wherein the second part of the projection system, comprising the spectral resolving element is arranged for projecting a spectrally resolved second image segment of each first image segment onto the sensor forming a second image in such a way that overlapping spectral components of different second image segments on the sensor originating from different first image segments on the spatial modulator have distinct modulation frequencies; and the readout device comprises a demodulator arranged for demodulating the distinct modulation frequencies for the purpose of distinguishing between the projected second image segments overlapping on the sensor on the basis of said distinct modulation frequencies.

The currently disclosed spectral imager requires little or no moving parts for scanning an object or scene, thus resulting in a spectral imager that may be simpler and/or faster than conventional scanning-type spectral imagers. Additionally, an image of the object or scene may be divided into segments by the spatial modulator. Modulating and demodulating the segments allow for distinguishing spectrally resolved projections of the segments when parts of these projections are overlapping on a sensor. Due to the ability to distinguish overlapping parts, a complicated projection system for separating projections of the segments on the sensor may be avoided. In this way a further simplification of the spectral imager may be achieved.

In a second aspect there is provided a method for spectrally imaging a multispectral object or scene, the method comprising projecting an image of the object or scene onto a sensor while spatially displacing spectral components of the image on the sensor; and reading out the image from the sensor; wherein the method further comprises projecting a first image of the object or scene and dividing said projected first image into a plurality of first image segments modulated with a respective plurality of modulation frequencies; projecting a spectrally resolved second image segment of each first image segment onto the sensor forming a second image in such a way that overlapping spectral components of different second image segments on the sensor originating from different first image segments have distinct modulation frequencies; reading out the projected second image segments from the sensor; and demodulating the distinct modulation frequencies thereby distinguishing between the projected second image segments overlapping on the sensor on the basis of said distinct modulation frequencies.

Similarly as argued above, by using the currently disclosed method for spectral imaging, complicated scanning and/or projection methods may be avoided. In this way a simpler method for spectral imaging may be achieved.

### BRIEF DESCRIPTION OF THE DRAWINGS

These and other features, aspects, and advantages of the apparatus, systems and methods of the present invention will become better understood from the following description, appended claims, and accompanying drawing wherein:
FIG 1 shows a schematic embodiment of a spectral imager.
FIG 2A shows a projection of a first image of an object or scene onto a spectral modulator.
FIG 2B shows a projection of a spectrally resolved second image of the first image of FIG 2A onto a sensor.
FIG 3 shows a schematic embodiment of a spectral imager comprising a two dimensional sensor.
FIG 4 shows a schematic embodiment of an imaging device comprising a spectral imager.

### DETAILED DESCRIPTION

The following detailed description of certain exemplary embodiments is merely exemplary in nature and is in no way intended to limit the invention, its application, or uses. The description is therefore not to be taken in a limiting sense, and the scope of the present system is defined only by the appended claims. In the description, reference is made to the accompanying drawings which form a part hereof, and in which are shown by way of illustration specific embodiments in which the described devices and methods may be practiced. These embodiments are described in sufficient detail to enable those skilled in the art to practice the presently disclosed systems and methods, and it is to be understood that other embodiments may be utilized and that structural and logical changes may be made without departing from the spirit and scope of the present system. Moreover, for the purpose of clarity, detailed descriptions of well-known devices and methods are omitted so as not to obscure the description of the present system.

There may be a general desire for obtaining both spatial and spectral information about an object or scene. In particular, it may be desired to capture an image of the object or scene that is spatially divided into pixels, wherein spectral information is obtained for each pixel of the image, e.g. providing a distribution of spectral components for each pixel. These pixels may be laid out e.g. in a one or two-dimensional grid covering sub-segments of the image. Also lower resolutions (few tens of pixels squared) may be highly desired. Important applications may include medical applications, wherein the spectral components may reveal properties of the tissue being imaged. Further applications may include, e.g. defense and security applications. The obtained spectral components may be compared e.g. to certain 'fingerprint' spectra of specific substances, e.g. by measuring the presence or absence of optical power in substance-specific wavelength bands to assess the presence of these substances. Conventional solutions may involve scanning systems, usually with moving parts, which may be expensive and cumbersome. Also, only a small line-shaped section of the image may actually be imaged at a time, which may imply loss of power efficiency and longer processing times.

Without being bound by theory, it is to be appreciated that the currently disclosed systems and methods may involve transferring one of the image dimensions (e.g. x or y) to a modulation frequency domain prior to spectrally decomposing the image along this said dimension and projecting it onto a sensor. The image thus projected may comprise segments of the image wherein spectral components of different segments may partially overlap each other along this said dimension on the sensor. By demodulating a captured image signal of the sensor, e. g. by filtering or Fourier transformation of the signal, this said dimension of the image may be may be reconstructed. In particular, it may be reconstructed from which one or more modulator segments the image signals originate by matching the respective modulation frequencies of the modulator segments.

Further advantages and applications may become more apparent from the following detailed description of the drawings. This description again is to be regarded in an illustrative and non-limiting manner. In particular, steps and/or parts of the shown embodiments may be omitted and/or added without departing from the scope of the current methods and systems, which scope is defined by the appended claims.

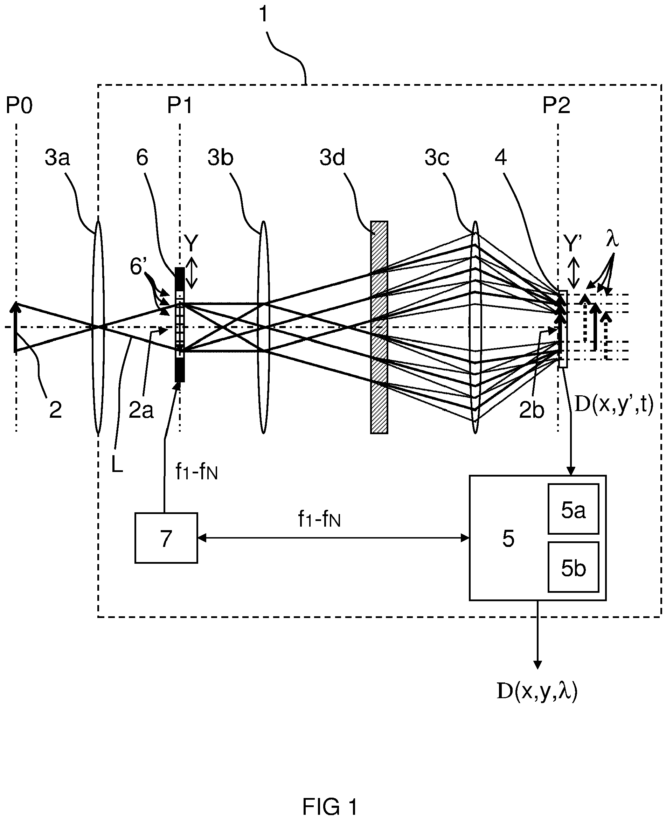

FIG 1 shows a spectral imager 1 arranged for imaging a multispectral object or scene 2, schematically represented with an arrow in object plane P0. The spectral imager 1 comprises a projection system 3a, 3b, 3c, 3d arranged for projecting an image 2b of the object or scene 2 onto a sensor 4. The projection system 3a-3d comprises a spectral resolving element 3d arranged for spatially displacing (decomposing) spectral components λ of the image 2b on the sensor 4. The readout device 5 is arranged for reading out the image 2b from the sensor 4.

A first part of the projection system 3a is arranged for projecting a first image 2a of the object or scene 2 onto a spatial modulator 6. The spatial modulator 6 comprises a plurality of modulator segments 6' arranged for providing a modulation of a respective plurality of first image segments of the first image 2a projected on the said modulator segments 6'. The spatial modulator further comprises driving circuitry 7 arranged for driving the plurality of modulator segments 6' with a respective plurality of N modulation frequencies f1, f2, ..., fN (i.e. f1 to fN). In this way each of said plurality of first image segments is passed with a respective modulation frequency on to a second part of the projection system 3b-3d.

The second part of the projection system 3b-3d, comprising the spectral resolving element 3d is arranged for projecting a spectrally resolved second image segment of each first image segment 2a' onto the sensor 4. These second image segments form a second image 2b on the sensor in such a way that overlapping spectral components λ of different second image segments on the sensor 4 originating from different first image segments on the spatial modulator 6 have distinct modulation frequencies f1 to fN.

The readout device 5 comprises a demodulator 5a arranged for demodulating the distinct modulation frequencies f1 to fN for the purpose of distinguishing between the projected second image segments overlapping on the sensor 4 on the basis of said distinct modulation frequencies f1 to fN.

In an embodiment the spectral resolving element 3d is arranged for spatially displacing the spectral components λ of the image 2b along a principal displacement direction defining a spectral axis Y' on the sensor 4. The driving circuitry 7 is arranged for driving the plurality of modulator segments 6' at least along a principal driving direction Y of the spatial modulator 6, which principal driving direction Y is projected substantially parallel (i.e. having an overlapping directional component) to the spectral axis Y' on the sensor. While the spatial modulators may comprise e.g. a one or two dimensional grid of modulator segments, for the current embodiment it may suffice to have a spatial modulator whose segments are arranged along a principal driving direction Y and/or the driving circuitry modulates the modulator segments along said principal driving direction Y. Alternatively, the modulator segments may also be modulated in other directions or modulated with random (yet known) frequencies. The demodulator may demodulate said frequencies to retrieve the origin of the projected image segments.

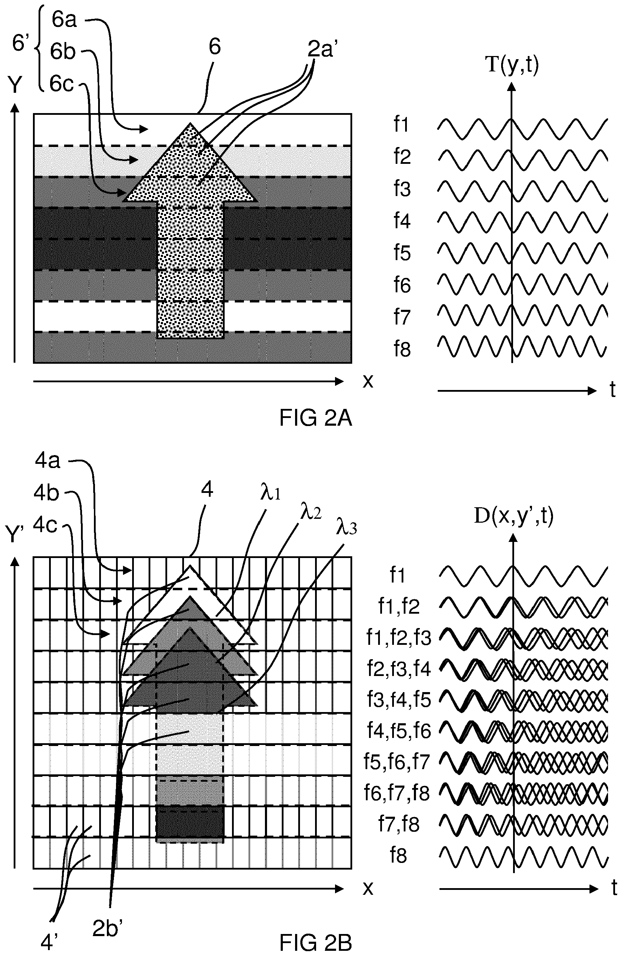

In an embodiment, the readout device 5 comprises a calibration circuit 5b arranged for determining spectral components of a second image segment 2b' as a function of a location along the spectral axis Y' on the sensor where the second image segment 2b' is detected. This location on the sensor 4 may be relative to a location of a corresponding first image segment 2a', from which the second image segment 2b' originates, along the principal axis Y' on the spatial modulator 6. It is to be appreciated that the second image segments forming the second image 2b may be spatially displaced on the sensor both because they are projected images of the first image segments which are themselves relatively separated on the spatial modulator and furthermore because of the spectral decomposition applied during the projection of the second image segments by the spectral resolving element 3d. Therefore, to reconstruct the spectral components of any particular image segment, the detected location of said spectral components is preferably calibrated to account for the spatial displacement due to the spectral resolving element and the relative displacement of this projection due to the relative position of the first image segment on the spatial modulator. This point may be further elucidated later with reference to FIGs 2A and 2B.

In an embodiment the modulator segments 6' are arranged for providing a frequency modulation of an envelope of light L passing through or reflecting off the modulator segments 6'. The term "modulation" is used to refer to the application of a time-varying profile to the envelope or amplitude of the light in an image segment. The "modulation frequency" refers to a frequency of an envelope of the light and is not to be confused with the spectral frequency of the light itself, i.e. the frequency components of the electromagnetic field. While typical spectral frequencies may range e.g. in the THz (10^12 Hertz) range or higher, typical modulation frequencies are in the range of a few Hz up to 1000 Hz or higher. To avoid confusion, reference is made to the "spectral components" of the light when referring to its spectral frequency components.

In an embodiment, the modulation frequencies f1 to fN of the modulator segments are higher than 10 Hz, preferably higher than 25 Hz, most preferably higher than 100 Hz. It is to be appreciated that the higher the modulation frequencies, the faster may be the response of the spectral imager, i.e. the shorter the time it may take the spectral imager to record a spectral image. In an example embodiment, N distinct modulation frequencies f1 to fN may be chosen in an interval between 100 Hz and 199 Hz. For N=100, e.g. a frequency interval of 1 Hz would suffice. Thus in this example: f1 = 100Hz, f2 = 101Hz, ..., f(N-1)=f99 = 198Hz, fN=f100= 199Hz.

In a further embodiment, the readout device 5 is arranged to read out the sensor 4 at a read-out frequency that is more than twice a highest modulation frequency at which the modulator segment 6' are modulated. This is also known as the Nyquist rate and may provide a sufficient sampling rate to prevent aliasing of the sampled frequencies. Alternatively, also lower sampling rates than the Nyquist rate may suffice for distinguishing between the discrete set of modulation frequencies e.g. if aliasing does not prevent distinction between the modulation frequencies. It may also be preferred that the highest modulation frequency is below the first harmonic (double) of the lowest frequency.

In a further embodiment the demodulator 5a comprises a frequency filtering means with one or more transmission filters matching one or more of the plurality of modulation frequencies f1 to fN. In this way spectral components λ of one or more of the second image segments 2b' corresponding to said matching one or more of the plurality of modulation frequencies f1 to fN may be separately obtained. The frequency filtering means may be implemented in hardware or software. The frequency filtering means may comprise e.g. band-pass filters, low pass, high-pass filters or combinations thereof. The filtering means may be implemented in software running on the readout device. For example, the readout device may run a (fast) Fourier transform algorithm on the data D(x, y', t) coming from the sensor thus obtaining a frequency profile of the data. Frequency components in the data may subsequently be assigned to the respective image segments that were modulated at that frequency by the spatial modulator.

In an embodiment, the spatial modulator 6 may comprise a liquid-crystal spatial light modulator, wherein the modulator segments 6' are formed by one or more cells comprising liquid crystals. Each cell may have a variable transmission characteristic depending on an applied voltage to the cells.

Liquid-crystal spatial light modulators are known as such e.g. from the field of optical pulse shaping. US2009/0116009A1 discloses separating an input electromagnetic waveform into a plurality of intermediate waveforms, each of the intermediate waveforms being spatially separated from one another; dispersing frequency components of each intermediate waveform onto different regions of a spatial light modulator and modulating, i.e. in this case setting an intensity of, at least some of the dispersed frequency components with the spatial light modulator; and recombining the dispersed frequency components for each of the intermediate waveforms to produce a plurality of temporally shaped output waveforms. An aspect of pulse shaping may be that the waveform is spectrally decomposed before impinging on the spatial modulator. This allows setting an intensity profile of spectral components of the waveform for creating a desired time-profile of the waveform once the spectral components are recombined.

In addition or alternative to a liquid-crystal spatial light modulators, also other types of spatial modulators may be used. Suitable spatial modulators may include e.g. mirror-based modulators, MEMS-based modulators, acousto-optic modulators, or combinations thereof. In general, any type of spatial modulator able to provide the desired modulation of the image segments may suffice.

In the shown embodiment the projection system comprises a series of three lenses 3a, 3b, and 3c. As used herein, a "lens" may refer to any optical component or combination of multiple optical components with a combined optical power and other characteristics suitable for the indicated task of e.g. focussing, defocusing, collimating, imaging, etcetera. Typically the lens may comprise one or more components in any suitable combination and setup having e.g. refractive, diffractive, and/or reflective properties to provide the indicated effect such as projecting an image of an object onto an imaging plane or collimating a non-collimated light beam. In an alternative embodiment the projection system may e.g. comprise parabolic mirrors for focussing, defocusing and/or collimating the light beams. The spectral resolving element 3d may e.g. comprise a diffraction grating, prism or other optical component suitable for angularly and/or spatially decomposing spectral components of an incoming light beam.

In the shown embodiment, from left to right, an object 2 is positioned in or near an object plane P0 of lens 3a. A first image 2a of the object 2 is projected by lens 3a in corresponding image plane P1. A spatial modulator is positioned in or near image plane P1 and the first image 2a is projected on the modular segments 6' comprised in the spatial modulator 6. The modular segments 6' are modulated with a plurality of modulation frequencies f1 to fN by driving circuitry 7. The first image 2a is thus divided into first image segments corresponding to the modulator segments 6' on which these image segments are projected. The modulator segments 6' are preferably modulated at least along a principal driving direction Y', though the segments may also be modulated in other directions.

The first image segments of the first image 2a pass through the spatial modulator with modulated intensity profiles intensities according to the frequencies f1 to fN of the respective modulator segments 6'. The first image 2a may be considered to form a second object to be imaged by the second part of the projection system 3b-3d onto the sensor 4. In the shown embodiment, light rays coming from the first image segments are spectrally decomposed by a spectrally resolving element 3d such as a grating or prism. Preferably, e.g. for a grating or prism, light that is to be diffracted or dispersed impinges the grating or prism with a constant angle of incidence. This may be achieved e.g. by collimating lens 3b arranged to collimate light from the first image segments onto the spectrally resolving element 3d, with a constant angle of incidence. For example, the modulator segments 6' may be positioned in a focal plane of lens 3b. Alternatively, other means for spectral decomposition may be used that do not required a constant angle of incidence, e.g. a curved diffraction grating.

The light from the first image segments is spectrally resolved along a spectral axis Y' by the spectrally resolving element 3d and projected by lens 3c onto the sensor 4 forming a second image 2b. Preferably, the spectral axis Y' corresponds, i.e. is substantially parallel with, a projection of the principal axis Y. In this way the modulation of the image segments is in the same direction as the spectral overlap. This second image 2b may comprise a plurality of overlapping second image segments for a plurality of spectral components λ that are comprised in the light L emitted or reflected by the object 2. E.g. when the object 2 emits over its entire body light at three discrete optical frequencies, three corresponding images may be formed on the sensor, each relatively shifted due to a frequency dependent diffraction or dispersion interaction with the spectrally resolving element 3d. In general, light of an object or scene 2 may comprise a plurality and/or continuum of spectral components λ that may vary over the dimensional layout of the object. The resulting second image 2b on the sensor may thus comprise a mix of partially overlapping spectral components originating from different parts of the object or scene.

Readout device 5 is arranged to read out image data D(x,y',t) from the sensor comprising e.g. a measured light intensity at x,y' positions over the sensor as a function of time t (or equivalently: frequency f1 to fN). The readout device 5 comprises a demodulator 5a for demodulating the frequencies f1 to fN of the image 2b. E.g. the demodulator comprises a series of hardware/software filters to isolate image segments with various modulation frequencies f1 to fN. In this image segments of the second image 2b may be distinguished and traced back to their spatial origin along the principal axis Y on the spatial modulator 6. Preferably, a sampling rate of the sensor exceeds a Nyquist rate to reconstruct the modulation frequencies f1 to fN.

The readout device 5 further comprises a calibration circuit 5b that comprises calibration data, e.g. a conversion matrix, to convert the sensor data D(x,y',t) into spectral image data D(x,y,λ). The sensor data D(x,y',t) may be converted e.g. as a function of modulation frequency f1 to fN and y' location along the spectral axis Y'. Such calibration data may be obtained e.g. by running a calibration wherein one or more objects with known spectral components are spectrally imaged, e.g. opening one at a time the modulator segment 6' and registering where along the spectral axis Y' the known spectral components fall on the sensor 4. In this way a relation may be established between a location of a modular segment 6' and its resulting image on the sensor as a function of spectral frequency. The calibration may also be used to map and/or correct for deviations, e. g. caused by the imaging optics.

The readout device 5 may communicate the modulation frequencies f1 to fN with the driving circuitry 7 of the spatial modulator 6 or vice versa. Alternatively, these modulation frequencies f1 to fN may be simply set in separate memory devices of either devices without intercommunication. These memory devices may be any suitable type of memory where data are stored. Any medium known or developed that can store and/or transmit information suitable for use with the present systems and methods may be used as a memory. The memory may also store application data accessible by the driving circuitry and/or readout device 5 for configuring it to perform operational acts in accordance with the present systems and methods. The memory may also store other desired data such as calibration data accessible by the readout device 5 or the calibration circuit 5a.

While currently shown as separate devices, the spatial modulator 6 and driving circuitry 7, as well as the readout device 5 and sensor 4 may all or partly be a portion of single (fully or partially) integrated systems which themselves may be partly or fully integrated into other parts of the spectral imager 1. Alternatively, instead of being integrated in a single device, parts of the shown devices may be distributed between multiple devices. Parts of the readout device such as the demodulator 5a and/or the calibration circuit 5b may be separate from the readout device. Their functionality may also be implemented on a dedicated or general purpose processing unit, e.g. in the form of software algorithms running on the said processing unit, e.g. comprised in a Personal Computer. Demodulation of sensor data may take place while the sensor data is being recorded but also after data acquisition is finished. E.g. the readout device 5 may record a movie of the sensor data, which movie may be subsequently analyzed, e.g. demodulated, during or after the measurement. Furthermore the system may comprise further components not currently shown, used in the typical operation of a spectral imager, e.g. an optional light source for illuminating the object or scene with a desired range of spectral components. This range may include also non-visible light. Other optional components of the spectral imager may include control means for controlling and/or setting the modulation frequencies, means for adjusting the projection system to image objects at various distances from the spectral imager, and/or means for adjusting a position or angle of the spectrally resolving element 3d for adjusting a wavelength range that is to be imaged, etcetera.

The sensor 4 may comprise any combination of sensors or sensing elements capable of measuring a spatial layout of spectral components of the respective image segments impinging the sensor 4 or its sensing elements 4', e.g. pixels. The sensor 4 may comprise any suitable photo sensor or detector for detecting the impinging electromagnetic radiation. Examples may include active pixel sensors (e.g. CMOS), charge-coupled devices (CCD), photo resistors or light dependent resistors (LDR), photovoltaic cells, photodiodes, photomultiplier tubes, phototransistors, or combinations thereof. To filter specific modulation frequencies, the sensor may comprise an integrated demodulator 5a.

While an example setup of optical components is shown, also alternative projection systems and means may be used for achieving similar results. E.g. lenses may be substituted with parabolic mirrors and/or their functionality may be combined or split up into one or more alternative optical components. The current systems and methods may be used to examine spectral components of an object or scene not only in the visible range, but also e.g. in the ultra-violet, infrared and beyond, e.g. Tera-Hertz. It is to be appreciated that particular types of non-visible radiation may be used to analyze compounds that may appear similar in the visible regime but the spectral signatures of which may vary in other wavelength ranges. While the currently shown system may operate with electromagnetic radiation, the general principle of the currently disclosed method may be extended e.g. also to other types of radiation such as particle radiation.

Related to the above disclosed spectral imager, there is further provided a method for spectrally imaging a multispectral object or scene 2. The method comprises projecting an image 2b of the object or scene 2 onto a sensor 4 while spatially displacing spectral components λ of the image 2b on the sensor 4; and reading out the image 2b from the sensor 4. The method further comprises projecting a first image 2a of the object or scene 2 and dividing said projected first image 2a into a plurality of first image segments 2a' modulated with a respective plurality of modulation frequencies f1 to fN. The method further comprises projecting a spectrally resolved second image segment 2b' of each first image segment 2a' onto the sensor 4 forming a second image 2b in such a way that overlapping spectral components λ of different second image segments 2b' on the sensor 4 originating from different first image segments 2a' have distinct modulation frequencies f1 to fN; The method further comprises reading out the projected second image segments 2b' from the sensor 4; and demodulating the distinct modulation frequencies f1 to fN thereby distinguishing between the projected second image segments 2b' overlapping on the sensor 4 on the basis of said distinct modulation frequencies f1 to fN.

In an embodiment, the method further comprises combining the spectrally resolved and distinguished second image segments 2b' into a spectral image of the multispectral object or scene 2.

In a further embodiment, the first image 2a is projected onto a spatial modulator 6 comprising a plurality of modulator segments 6' arranged for dividing the first image 2a into the plurality of first image segments 2a' modulated with the respective plurality of modulation frequencies f1 to fN.

In an embodiment the modulator segments 6' are simultaneously modulated at a plurality of respective modulation frequencies f1 to fN. This means that light may simultaneously pass the spatial modulator at plurality of respective modulation frequencies f1 to fN. This has an advantage that more light may fall onto the detector. In a further embodiment (not shown here), the modulator segments are arranged to vary transmission and reflection of light impinging thereon in a reciprocal manner, i.e. the sum of reflected and transmitted light is substantially constant and e.g. substantially equal to the original light intensity. In this way, substantially no light intensity is lost but is either transmitted or reflected off the spatial modulator. In a further embodiment (not shown here), the projection system of the spectral imager is arranged to capture both the transmitted and reflected light; and project and decompose the transmitted and reflected frequency modulated image segments onto respective sensors. In this way, substantially all light entering the spectral imager may be used to capture a spectral image of the object or scene under study. Efficient use of light may be important, e.g. in a camera.

Alternatively, in an embodiment not all modulator segments 6' are simultaneously modulated. For example, a sub-selection of the modulator segments may be modulated only a few at a time. This may find application, e.g. when light efficiency is not an issue. E.g. the spectral imager may be arranged to allow light from only one or only a few modulator segments 6' to pass the spatial modulator, while the other modulator segments 6' block the impinging light. This may have an advantage that fewer distinct modulation frequencies are required. By restricting the number of distinct modulation frequencies, lower demands may be placed on filtering means that may be comprised in the demodulator. Furthermore, because the number of modulator segments is not restricted by the number of available modulation frequencies, a higher resolution of the spatial modulator may be attained, e.g. by having a higher density of modulator segments.

In a further embodiment, the modulator segments 6' passing the light on to the sensor are cycled e.g. in a scanning manner over the spatial modulator. When using only one or a few modulator segments at a time, spatial overlap between projections of the image segments on the sensor may be prevented. Therefore, in this embodiment the intensity profile of the image segments need not necessarily be frequency modulated and the demodulator may be dispensed with. This embodiment may operate similar to a scanning-type spectral imager, wherein a slit is scanned over an image of an object or scene, except that the current embodiment does not require moving parts. An advantage of this may be that this embodiment may operate at higher scanning frequencies than conventional scanning-type spectral imagers. E.g. an image of the object may be divided into 100 modulator segments that each pass a segment of the image during a time period of 0.001 s. The complete image may thus be scanned in a time period of only 0.1 seconds or at 10 Hz.

Accordingly, there is disclosed another spectral imager 1 for imaging a multispectral object or scene 2, the spectral imager 1 comprising a projection system 3a-3d arranged for projecting an image 2b of the object or scene 2 onto a sensor 4, the projection system 3a-3d comprising a spectral resolving element 3d arranged for spatially displacing spectral components λ of the image 2b on the sensor 4; and a readout device 5 arranged for reading out the image 2b from the sensor 4; wherein a first part of the projection system 3a is arranged for projecting a first image 2a of the object or scene 2 onto a spatial modulator 6 comprising a plurality of modulator segments 6' arranged for providing a modulation of a respective plurality of first image segments 2a' of the first image 2a projected on the said modulator segments 6'; and driving circuitry 7 arranged for driving the plurality of modulator segments 6' such that a sub-selection of the first image segments 2a' is passed with a respective plurality of modulation frequencies f1 to fN thereby passing each of said plurality of first image segments 2a' with a respective modulation frequency on to a second part of the projection system 3b-3d; wherein the second part of the projection system 3b-3d, comprising the spectral resolving element 3d is arranged for projecting a spectrally resolved second image segment 2b' of each first image segment 2a' onto the sensor 4 forming a second image 2b in such a way that spectral components λ of different second image segments 2b' on the sensor 4 originating from different first image segments 2a' on the spatial modulator 6 do not overlap.

FIG 2A shows a projection of a first image of an object or scene onto a spectral modulator 6. The object and corresponding image comprise a multispectral arrow. While the arrow is projected upright, this may also be upside down depending on the projection system. The first image comprises first image segments 2a' that correspond to the respective modulator segments 6' on which they are projected. The modulator segments are modulated along a principal axis Y leading to a time t varied transmission T of the image segments 2a' along a y-coordinate coinciding with the axis Y. E.g. the modulator segments 6a,6b,and 6c are driven to cycle with respective modulation frequencies f1, f2, and f3.

On the right hand side of FIG 2A is shown the transmission cycle of each image segment 2a'. The modulator segments are shown as they may appear at a specific time t in the respective cycles. A lighter color represents more transmission and a darker color represents less transmission. As is shown, e.g. the modulator segments that cycle with modulation frequencies f1 and f7 have a high transmission at time t while the segments cycling with frequencies f4 and f5 have a low transmission. At another time of the cycle, this may be different.

As is shown, the cycles may each oscillate with a distinct frequency f1, f2, ..., f8. As will be argued later, this is not necessarily the case for all modulator segments, in particular if they are far enough apart on the spatial modulator to have no overlapping spectral components on the sensor. Currently, it is shown that the modulator segments go through a sinusoidal transmission cycle. This may have an advantage that modulation frequencies are well defined and may more easily be distinguished by the demodulator.

Alternatively, the modulator segments 6' may also be driven according to a block form cycle, e.g. switching transmission between on and off states at respective modulation frequencies. This may have an advantage that a more simple spatial modulator may be used. Also other types of modulation waveforms may be employed such as sawtooth or any other modulation wherein preferably the waveforms have a distinct (range of) frequency components that may be demodulated. Besides frequency modulation, also other types of modulation may be employed, e.g. amplitude modulation, phase modulation, etc. The demodulator may be correspondingly adapted to demodulate in addition or alternatively said other types of modulation to distinguish image segments overlapping on the sensor. Alternatively or in addition to a transmission through the spatial modulator being varied, a reflection off the spatial modulator may be varied.

FIG 2B shows a projection of a spectrally resolved second image of the first image of FIG 2A onto a sensor 4. The sensor 4 comprises a plurality of sensing elements 4', such as pixels. The second image comprises second image segments 2b' which are spectrally resolved projections of the first image segments 2a' of FIG 2A. In the current example, for the sake of clarity and simplicity, the imaged object comprises three spectral components λ1, λ2, λ3, each uniformly present over the spatial x,y layout of the original object being imaged. Of course, in general, an imaged object may comprise any number of spectral components that may also be non-uniformly distributed over a spatial layout of the object or scene. The spectral imager may optionally comprise one or more spectral filters for limiting the range and/or the number of frequencies passed to the spectral resolving element and/or the sensor. This may limit the space that is to be reserved for the spectral axis Y' on the sensor 4.

Spectral components λ1, λ2, λ3 of the image segments 2b' are spatially displaced relative to one another to fall onto sensing elements 4' of the sensor, e.g. by a spectrally resolving element such as shown in FIG 1. In the current embodiment, the sensor elements 4' are laid out in an x,y' grid pattern, wherein the y' coordinate coincides with the spectral axis Y'. On the right hand side of FIG 2B, the time-varied intensity cycles D(x,y',t) of the spectral components registered by the sensor, are illustrated. These are the (partially) overlapping cycles of the corresponding modulators segments 6a,6b, 6c, projected on the respective sensor rows 4a,4b,4c. For the sake of explanation, the individual cycles of the originating modulator segments are shown. In reality, the sensor may register not the individual cycles, but their combined sum. The individual cycles may be recovered by a demodulator. An illustration of how the second image segments 2b' may appear at time t on the sensor 4 is illustrated on the left hand side.

In the current example, light with spectral component λ1 at a modulation frequency f1 is arranged to fall onto the first sensor row 4a. The second image segment 2b' projected on the first sensor row 4a corresponds to the first image segment 2a' transmitted by the first modulator segment 6a of FIG 2A.

On a second sensor row 4b, a mix of overlapping spectral components λ1 and λ2 is projected at respective modulation frequencies f2 and f1. The spectral component λ2 with modulation frequency f1 originates again from the first modulator segment 6a of FIG 2A and corresponds to the image segment comprising the tip of the arrow. The spectral component λ1 with modulation frequency f2 originates from the second modulator segment 6b of FIG 2A.

On a third sensor row 4c, a mix of overlapping spectral components λ1, λ2 and λ3 is projected at respective modulation frequencies f3, f2, and f1. The spectral component λ3 with modulation frequency f1 originates from the first modulator segment 6a of FIG 2A and corresponds again to the tip of the arrow. The spectral component λ2 with modulation frequency f2 originates from the second modulator segment 6b of FIG 2A. The spectral component λ1 with modulation frequency f3 originates from the third modulator segment 6c of FIG 2A.

The three sensor rows 4a, 4b, and 4c may thus each register different spectral components λ1, λ2, and λ3 of the image segment transmitted by the first modulator segment 6a. These spectral components may be isolated e.g. by filtering the sensor data for the specific modulation frequency f1 of the first modulator segment. Similarly, by isolating the other modulation frequencies f2 - f8, the spectral components λ1, λ2, λ3 for each of the transmitted image segments 2a' may be obtained.

It is noted that each first image segment 2a' may be projected with a different central position on the sensor depending on a spatial position of the corresponding modulator segment 6'. This may mean that the spectral components of different image segments 2a' may be registered at different positions along the spectral axis Y'. To reconstruct the (magnitude of the) spectral components, the sensor may be calibrated for determining spectral components of a second image segment 2b' as a function of a location y' along the spectral axis Y' on the sensor where the second image segment 2b' is detected relative to a location of a corresponding first image segment 2a', from which the second image segment 2b' originates, along the principal axis Y' on the spatial modulator 6.

For example, registering a second image segment 2b' with modulation frequency f1 on sensor row 4a means that this originated from modulator segment 6a and that the registered intensity should be attributed to spectral component λ1. On the other hand, if an image segment with modulation frequency f1 is registered on sensor row 4b, it should be attributed to spectral component λ2. Further, if an image segment with modulation frequency f2 is registered on sensor row 4b, this would correspond to spectral component λ1 of the image segment transmitted through modulator segment 6b. In this way for each combination of modulation frequency and position along the spectral axis, e.g. each sensor row, a corresponding spectral component λ and y coordinate may be reconstructed.

The spectral components may be overlapping along the spectral axis Y'. The x coordinate of the projected images has not been mixed and may correspond directly to the x coordinate of the first image 2a and/or the object 2. A resolution along the x coordinate may also be independent of a resolution of the spatial modulator. Optionally, depending on a magnification factor of the projection system, the x and y' coordinates may be factored accordingly. Combining data from all sensing elements 4', i.e. the pixels of the sensor, a three dimensional array may be constructed wherein for the spatial coordinates x,y of the first image a distribution of spectral components may be determined.

In an embodiment the sensor 4 comprises a two-dimensional array of sensing elements 4' and the readout device (not shown here) is arranged for combining the spectrally resolved and distinguished second image segments 2b' into a three-dimensional data array comprising two dimensional images of the object or scene for each spectrally resolved component λ of the object or scene. Alternatively, the sensor 4 comprises a one-dimensional array of sensing elements 4' arranged along the spectral axis Y' and the readout device (not shown here) is arranged for combining the spectrally resolved and distinguished second image segments 2b' into a two-dimensional data array comprising one dimensional images of the object or scene for each spectrally resolved component λ of the object or scene.

It is to be appreciated that not necessarily all modulation frequencies need to be distinct. E.g. in the current example, modulation frequency f4 need not be distinct from f1, since image segments 2b' modulated with frequency f1 are not mixed on the sensor 4 with image segments modulated with frequency f4. The same may apply for f2 and f5, f3 and f6, f1 etc. In fact only three distinct modulation frequencies may be used for the current example. On the other hand, there may also be used more modulation frequencies than necessary. E.g. the spatial modulator may also comprise a two dimensional grid of modulator segments, each being modulated with a different frequency. The demodulator may demodulate signals from each pixel on a sensor separately instead of row-by-row. The modulation frequencies f1 to fN need not be constant but may also cycle e.g. through a preset or randomized range of frequencies.

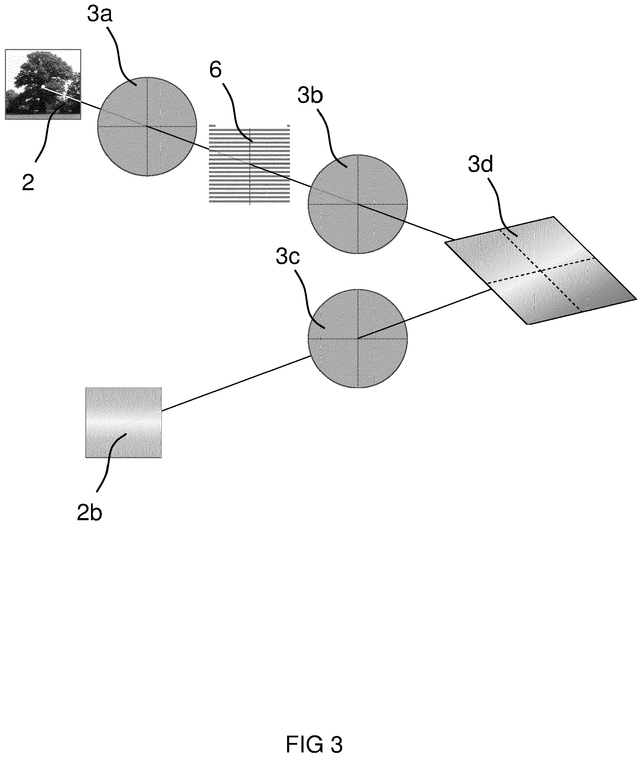

FIG 3 shows a schematic embodiment of a spectral imager imaging a two dimensional scene 2, in this case illustrated by an image of a tree. The scene 2 is imaged onto a spatial modulator 6 by imaging optics 3a. The image of scene 2 is modulated by spatial modulator 6. Light from this modulated image is projected by optical element 3b onto a spectrally resolving element 3d and reflected towards optical element 3c to be projected as a spectrally resolved and modulated image 2b, e.g. on a two dimensional sensor. By demodulating the registered image on the sensor, a spectrally resolved image of the scene 2 may be obtained. Although in this schematic drawing, the spectrally resolving element 3d is shown as reflecting the incoming light e. g. acting as a diffraction grating, alternatively, the spectrally resolving element 3d may transmit the light e.g. as a prism. The spectrally resolving element 3d may be placed at a suitable angle of incidence to maximize efficiency of the reflected or transmitted light.

For an image that contains a continuum of colors, the image 2b may appear as a colorful blur. Consider the Nth modulator segment or pixel of the spatial modulator 4. It may be modulated by frequency fN. If the registered image 2b is filtered through a narrow bandpass filter around fN, in hardware or software, the spectrum of that particular modulator segment or pixel may be obtained, wherein the vertical direction along the sensor may represent the wavelength axis. The origin of the wavelength axis may depend on the modulator segment or pixel number, which may be accounted for to obtain the true spectral information. So by filtering the registered data around frequency fN, a spectrum of modulator segment or pixel N may be obtained. This can be repeated for each pixel, to build a spectral image.

In an embodiment, the optical spectrum of each pixel of an object may be measured. The object is imaged onto a spatial modulator (liquid crystal, mems, ...). In principle a 1D modulator may suffice. Each line in the image is modulated at a frequency which may be dedicated. The image may be spectrally decomposed by a diffractive element (grating, prism, ...) and imaged onto a sensor such as a CCD camera. In the final image, any modulation frequency (on the video signal, or in a stored movie) can be filtered to find the response of a line in the object. From the frequency from what (line of) pixel(s) that signal originates, the wavelength scale in the image may be deduced, as well as the corresponding wavelength information. The orthogonal direction in the image may be the second dimension in the original object. The entire image may be processed instead of a selected line. In a way, the proposed system does need to scan over the object in time, as conventional devices, but may multiplex the scan to the frequency domain so that all lines can be processed simultaneously.

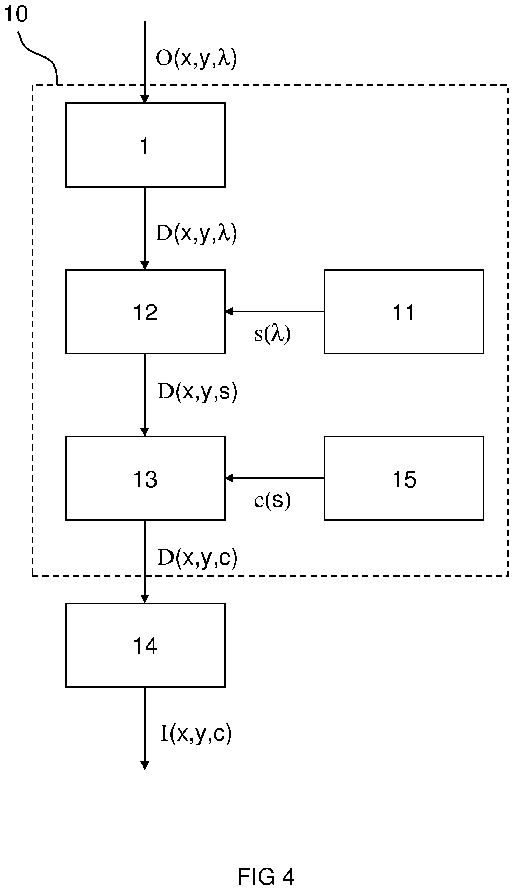

FIG 4 shows a schematic embodiment of an imaging device 10 comprising a spectral imager 1, e.g. according to the above description. The imaging device 10 further comprises a memory 11, a comparison module 12, and a display driver 13. The memory 11 is arranged for storing spectral profiles s(λ) of a plurality of known materials, e.g. spectral distributions of spectral components of said known materials. The comparison module 12 is arranged for comparing spectral components λ of the second image segments 2b' produced by the spectral imager 1 to the spectral profiles s(λ) of the known materials and identifying the known materials for said image segments. The display driver 13 is arranged for displaying pixels with identified known materials with preset colors, patterns and/or intensities c on a display 14. The setting for the preset colors, patterns and/or intensities c may be provided by an optional memory 15 which may also be integrated with memory 11.

In use, the spectral imager 1, may register information O on an object or scene comprising spatial coordinates x, y and spectral components λ. The spectral imager 1 converts the registered object or scene into a three-dimensional data array D(x,y,λ) and passes this data to the comparison module 12. The comparison module compares the spectral components for each coordinate x,y to the stored spectral profiles s(λ) of known materials. This comparison may comprise e.g. a least-squares decomposition of the registered spectral profile λ into one or more spectral profiles s(λ) and matching the best fitting decomposition to determine the best matching known material.

The comparison module 12 may pass data D(x,y,s) on to display driver 13. This data may comprise for each coordinate x,y an identified best matching known material or combination of known materials the spectral profiles of which were stored in the memory 11. The display driver may drive an image onto a display 14. To display the three dimensional data, areas of the image corresponding to certain known materials may be displayed with a certain preset color, pattern, and/or intensity which setting may be programmed in memory 15. Examples of patterns include solid, hatched, dotted, etc. The pattern may also be animated, e.g. blinking, to focus an attention of a user. Groups of materials, e.g. tissue, may also be assigned a single color or pattern and an intensity varied as a function of the original intensity of the image coming from the object or scene in a particular range of wavelengths. The steps of identifying a known material and assigning this to a certain color, pattern, and/or intensity may also be combined.

In an embodiment, the imaging device 10 may be comprised in a medical scanner, wherein the known materials comprise tissue compositions. The spectral profiles s(λ) may e.g. comprise spectral signatures of tissues such as healthy tissue and damaged or unhealthy tissue. The imaging device may comprise an endoscope for imaging an inside of a patient, e.g. during medical procedures or checkups. In another embodiment, the imaging device 10 may be comprised in a security camera, wherein the known materials comprise explosive and/or illegal compounds such as narcotics. The security camera may be deployed e.g. in an airport to scan for the said materials and indicate a contour of the material on a security monitor screen. Of course also other applications of the presently disclosed spectral imager and/or the imaging device may be envisaged.

An aspect of the current teachings may be to add spectral information to an image, which can be considered as moving from a two dimensional information structure (an image) to a three dimensional information structure (a spectrally resolved image). To obtain a spectrum, a dispersive element translates the wavelength dimension to a spatial dimension. Also the image provides two spatial dimensions (rows and columns), so effectively three dimensions may need to be monitored. Typical sensors or measurement devices such as a CCD camera may support only two dimensions, so one of the three is to be measured otherwise.

In the present systems and methods, this may be provided by transferring the first image spatial dimension to a frequency dimension. So the camera measures the second image spatial dimension, and the (spatial dimension corresponding to the) wavelength. It may not matter which spatial dimension (rows or columns) of the image is encoded by a respective modulation frequency (rows or columns), the other dimension (columns or rows) can be left as is. So indeed all pixels in a row, or all pixels in a column, may have the same modulation frequency since they may be distinguished by the camera. Alternative implementations may include electrical filtering of all pixel signals, by taking a movie that is fast enough to catch the fastest modulation, or by modulating only a part of the image at a time to make signal processing simpler.

The various elements of the embodiments as discussed and shown offer certain advantages, such as providing a robust, simple, low-cost, fast and/or sensitive spectral imager. Of course, it is to be appreciated that any one of the above embodiments or processes may be combined with one or more other embodiments or processes to provide even further improvements in finding and matching designs and advantages. It is appreciated that this invention offers particular advantages spectral imaging, and in general can be applied for any type of imaging wherein three dimensional information is to be read out from a two dimensional sensor. Fields of use may include but are not limited to medical, defense, security, astronomy, etc.

Finally, the above-discussion is intended to be merely illustrative of the present system and should not be construed as limiting the appended claims to any particular embodiment or group of embodiments. Thus, while the present system has been described in particular detail with reference to specific exemplary embodiments thereof, it should also be appreciated that numerous modifications and alternative embodiments may be devised by those having ordinary skill in the art without departing from the broader and intended spirit and scope of the present system as set forth in the claims that follow. The specification and drawings are accordingly to be regarded in an illustrative manner and are not intended to limit the scope of the appended claims.

In interpreting the appended claims, it should be understood that the word "comprising" does not exclude the presence of other elements or acts than those listed in a given claim; the word "a" or "an" preceding an element does not exclude the presence of a plurality of such elements; any reference signs in the claims do not limit their scope; several "means" may be represented by the same or different item(s) or implemented structure or function; any of the disclosed devices or portions thereof may be combined together or separated into further portions unless specifically stated otherwise; no specific sequence of acts or steps is intended to be required unless specifically indicated; and no specific ordering of elements is intended to be required unless specifically indicated.

## Claims

1. Spectral imager (1) for imaging a multispectral object or scene (2), the spectral imager (1) comprising
- a projection system (3a-3d) arranged for projecting an image (2b) of the object or scene (2) onto a sensor (4), the projection system (3a-3d) comprising a spectral resolving element (3d) arranged for spatially displacing spectral components (λ) of the image (2b) on the sensor (4); and
- a readout device (5) arranged for reading out the image (2b) from the sensor (4); wherein
- a first part of the projection system (3a) is arranged for projecting a first image (2a) of the object or scene (2) onto a spatial modulator (6) comprising
○ a plurality of modulator segments (6') arranged for providing a modulation of a respective plurality of first image segments (2a') of the first image (2a) projected on the said modulator segments (6'); and
○ driving circuitry (7) arranged for driving the plurality of modulator segments (6') with a respective plurality of modulation frequencies (f1-fN) thereby passing each of said plurality of first image segments (2a') with a respective modulation frequency on to a second part of the projection system (3b-3d); wherein
- the second part of the projection system (3b-3d), comprising the spectral resolving element (3d) is arranged for projecting a spectrally resolved second image segment (2b') of each first image segment (2a') onto the sensor (4) forming a second image (2b) in such a way that overlapping spectral components (λ) of different second image segments (2b') on the sensor (4) originating from different first image segments (2a') on the spatial modulator (6) have distinct modulation frequencies (f1-fN); and
- the readout device (5) comprises a demodulator (5a) arranged for demodulating the distinct modulation frequencies (f1-fN) for the purpose of distinguishing between the projected second image segments (2b') overlapping on the sensor (4) on the basis of said distinct modulation frequencies (f1-fN) .

2. Spectral imager according to claim 1, wherein the spectral resolving element (3d) is arranged for spatially displacing the spectral components (λ) of the image (2b) along a principal displacement direction defining a spectral axis (Y') on the sensor (4); and the driving circuitry (7) is arranged for driving the plurality of modulator segments (6') in a principal driving direction (Y) of the spatial modulator (6), which principal driving direction (Y) is projected parallel to the spectral axis (Y') on the sensor.

3. Spectral imager according to claim 2, wherein the readout device (5) comprises a calibration circuit (5b) arranged for determining spectral components of a second image segment (2b') as a function of a location (y') along the spectral axis (Y') on the sensor where the second image segment (2b') is detected relative to a location of a corresponding first image segment (2a'), from which the second image segment (2b') originates, along the principal axis (Y') on the spatial modulator (6).

4. Spectral imager according to any of the previous claims, wherein the demodulator (5a) comprises a frequency filtering means with one or more transmission filters matching one or more of the plurality of modulation frequencies (f1-fN) for the purpose of obtaining spectral components (λ) of one or more of the second image segments (2b') corresponding to said matching one or more of the plurality of modulation frequencies (f1-fN).

5. Spectral imager according to any of the previous claims, wherein the modulator segments (6') are arranged for providing a frequency modulation of an envelope of light (L) passing through or reflecting off the modulator segments (6').

6. Spectral imager according to any of the previous claims, wherein the spatial modulator (6) comprises a liquid-crystal spatial light modulator, wherein the modulator segments (6') are formed by one or more cells comprising liquid crystals, wherein each cell has a variable transmission characteristic depending on an applied voltage to the cells.

7. Spectral imager according to any of the previous claims, wherein the modulator segments (6') are simultaneously modulated at a plurality of respective modulation frequencies (f1-fN).

8. Spectral imager according to any of the previous claims, wherein the sensor (4) comprises a two-dimensional array of sensing elements (4') and the readout device (5) is arranged for combining the spectrally resolved and distinguished second image segments (2b') into a three-dimensional data array comprising two dimensional images of the object or scene for each spectrally resolved component (λ) of the object or scene (2).

9. Imaging device (10) comprising the spectral imager according to any of the previous claims, the imaging device (10) comprising
- a memory (11) for storing spectral profiles (s(λ)) of a plurality of known materials;
- a comparison module (12) for comparing spectral components (λ) of the second image segments (2b') produced by the spectral imager (1) to the spectral profiles (s(λ)) of the known materials and identifying the known materials for said image segments (2b'); and
- a display driver (13) for displaying image segments (2b') with identified known materials with preset colors, patterns and/or intensities on a display (14).

10. Medical scanner comprising the imaging device of claim 9, wherein the known materials comprise tissue compositions.

11. Security camera comprising the imaging device of claim 9, wherein the known materials comprise explosive and/or illegal compounds.

12. Method for spectrally imaging a multispectral object or scene (2), the method comprising
- projecting an image (2b) of the object or scene (2) onto a sensor (4) while spatially displacing spectral components (λ) of the image (2b) on the sensor (4); and
- reading out the image (2b) from the sensor (4);
- wherein the method further comprises
- projecting a first image (2a) of the object or scene (2) and dividing said projected first image (2a) into a plurality of first image segments (2a') modulated with a respective plurality of modulation frequencies (fl-fN);
- projecting a spectrally resolved second image segment (2b') of each first image segment (2a') onto the sensor (4) forming a second image (2b) in such a way that overlapping spectral components (λ) of different second image segments (2b') on the sensor (4) originating from different first image segments (2a') have distinct modulation frequencies (f1-fN);
- reading out the projected second image segments (2b') from the sensor (4); and
- demodulating the distinct modulation frequencies (f1-fN) thereby distinguishing between the projected second image segments (2b') overlapping on the sensor (4) on the basis of said distinct modulation frequencies (f1-fN) .

13. Method according to claim 12, further comprising combining the spectrally resolved and distinguished second image segments (2b') into a spectral image of the multispectral object or scene (2).

14. Method according to claim 12 or 13, wherein the first image (2a) is projected onto a spatial modulator (6) comprising a plurality of modulator segments (6') arranged for dividing the first image (2a) into the plurality of first image segments (2a') modulated with the respective plurality of modulation frequencies (f1-fN).
